# EUROPEAN PATENT APPLICATION

(11) **EP 4 579 940 A1**
(43) Date of publication of application: **02.07.2025**
(21) Application number: 23918992.1
(22) Date of filing: 31.01.2023
(51) Int. Cl.: H01M 50/682, H01M 50/147, H01M 50/193, H01M 50/148, H01M 50/15

(54) **BATTERY CELL, BATTERY, AND ELECTRICAL DEVICE**

(71) Applicant: Contemporary Amperex Technology (Hong Kong) Limited, Central (HK)
(72) Inventor: ZHOU, Wenlin, Ningde, Fujian 352100 (CN); XU, Liangfan, Ningde, Fujian 352100 (CN); ZHANG, Qianqian, Ningde, Fujian 352100 (CN); LI, Xing, Ningde, Fujian 352100 (CN); LI, Quankun, Ningde, Fujian 352100 (CN); WANG, Peng, Ningde, Fujian 352100 (CN)
(74) Representative: Ran, Handong
(86) International application number: PCT/CN2023/074010
(87) International publication number: WO 2024/159410

(57) **Abstract**

The present application relates to the technical field of batteries, and provides a battery cell, a battery, and an electrical device. The battery cell comprises a casing, an electrode terminal, an electrode assembly, a support frame, and an electrolyte retention layer. The casing is provided with a wall part, and the electrode terminal is arranged on the wall part. The electrode assembly is accommodated in the casing, the electrode assembly is provided with a main body part and a tab, and in the thickness direction of the wall part, the tab protrudes out of the end of the main body part facing the wall part and is connected to the electrode terminal. The support frame is arranged between the wall part and the main body part in the thickness direction of the wall part, and the support frame is configured to support the main body part. The electrolyte retention layer is arranged on the support frame, and the electrolyte retention layer is configured to absorb and store an electrolyte in the casing. The electrolyte located at the bottom of the casing can be absorbed and stored by means of the electrolyte retention layer, so that the phenomenon that the electrolyte flows out of the casing when the bottom of the battery cell is damaged due to impact can be relieved, thereby reducing the risk of use of the battery cell caused by electrolyte leakage, and thus the safety of use of the battery cell can be improved.

## Description

### Technical Field

The present application relates to the field of battery technology, and specifically, to a battery cell, a battery, and an electric device.

### Background Art

In recent years, new energy vehicles have developed with a great leap. In the field of electric vehicles, power batteries play an irreplaceable and important role as power sources of the electric vehicles. With the vigorous promotion of new energy vehicles, the demand for power battery products is increasing, and as a core component of new energy vehicles, batteries have high requirements in terms of use safety. In the above, the shell of the battery cell is usually provided with electrode terminals and other components, and the electrode assembly has tabs, which can realize inputting or outputting of the electric energy for the battery cell after being connected to the electrode terminals. However, the battery cell of this structure often leaks electrolytic solution during inverted use, which leads to a great safety hazard in the use of the battery cell.

### Summary

Embodiments of the present application provide a battery cell, a battery, and an electric device, which can effectively improve the use safety of the battery cell.

In a first aspect, embodiments of the present application provide a battery cell, including a shell, an electrode terminal, at least one electrode assembly, a support frame and at least one liquid retaining layer, where the shell has a wall part; the electrode terminal is provided on the wall part; the at least one electrode assembly is accommodated in the shell, the at least one electrode assembly each have a main body and a tab, where in a thickness direction of the wall part, the tab protrudes from one end of the main body facing the wall part and is connected to the electrode terminal; in the thickness direction of the wall part, the support frame is provided between the wall part and the main body, and the support frame is configured to support the main body; and the at least one liquid retaining layer is provided on the support frame, and the at least one liquid retaining layer is configured to absorb and store the electrolytic solution in the shell.

In the above technical solution, the support frame is provided between the wall part and the main body, and the support frame may support the main body of the electrode assembly, that is the battery cell is provided inverted, such that the wall part of the battery cell provided with the electrode assembly is provided facing downwards, to make the end of the electrode assembly provided with the tabs face downwards, so as to enable the support frame to alleviate the situation where local stress occurs on the main body of the electrode assembly, to reduce the risk of damage to the main body of the electrode assembly. By providing the liquid retaining layer on the support frame, the liquid retaining layer can absorb and store the electrolytic solution located at the bottom of the shell and free between the support frame and the wall part. Therefore, when the bottom of the battery cell is damaged by impact, the phenomenon of the electrolytic solution flowing out of the shell can be alleviated, and the outflow amount of the electrolytic solution can be reduced, which is beneficial to reduce the use risk of the battery cell caused by leakage during use and further can effectively improve the use safety of the battery cell.

In some embodiments, in the thickness direction of the wall part, the liquid retaining layer is located between the wall part and the support frame.

In the above technical solution, by providing the liquid retaining layer between the wall part and the support frame, the liquid retaining layer can better absorb and store the electrolytic solution free between the wall part and the support frame, so that when the bottom of the battery cell is damaged by impact, the outflow amount of the electrolytic solution free between the wall part and the support frame can be further reduced, to further improve the use safety of the battery cell.

In some embodiments, in the thickness direction of the wall part, the side of the support frame facing the wall part is provided with a groove, and at least a portion of the liquid retaining layer is accommodated in the groove.

In the above technical solution, by providing the groove for accommodating the liquid retaining layer on the side of the support frame facing the wall part, the liquid retaining layer may be provided in the groove of the support frame, thereby optimizing the space occupied by the liquid retaining layer inside the battery cell, which is beneficial to improve the internal space utilization rate of the battery cell and further effectively improve the energy density of the battery cell.

In some embodiments, the support frame is provided with a through hole which communicates with the groove and the internal space of the shell.

In the above technical solution, the support frame is provided with a through hole which communicates with the groove of the support frame and the internal space of the shell, so that the electrolytic solution in the liquid retaining layer located in the groove can flow back to the interior of the shell through the through hole, facilitating the main body of the electrode assembly coming into contact with the electrolytic solution stored in the liquid retaining layer, thereby enhancing the wetting effect of the electrolytic solution on the main body of the electrode assembly, which is beneficial to improve the use performance of the battery cell.

In some embodiments, the through hole is provided at the groove bottom wall of the groove, and extends through the groove bottom wall of the groove in the thickness direction of the wall part.

In the above technical solution, the through hole is provided at the groove bottom wall of the groove, and extends through two sides of the groove bottom wall of the groove, such that the electrolytic solution stored in the liquid retaining layer can directly contact the main body located at the side of the support frame away from the wall part, after flowing back to the interior of the shell through the through hole, thereby facilitating the wetting effect of the electrode assembly.

In some embodiments, the battery cell includes multiple liquid retaining layers, and in the thickness direction of the wall part, the side of the support frame facing the wall part is provided with multiple grooves, and each of the liquid retaining layers is accommodated in a corresponding groove.

In the above technical solution, the multiple liquid retaining layers are provided between the support frame and the wall part, and each of the liquid retaining layer is provided in a corresponding groove. The battery cell of such structure can on the one hand improve the effect of the battery cell absorbing and storing the electrolytic solution through the liquid retaining layer, so as to further reduce the outflow amount of the electrolytic solution free between the wall part and the support frame when the bottom of the battery cell is impacted and damaged; and on the other hand, can play a certain role of positioning and limiting each liquid retaining layer, so that the multiple liquid retaining layers are all provided on the support frame, which is beneficial to reduce the difficulty in assembling the multiple liquid retaining layers onto the support frame and alleviate the phenomenon of shaking of the liquid retaining layers in the battery cell.

In some embodiments, in the thickness direction of the wall part, the tab includes a first section located on a side of the liquid retaining layer facing the wall part, the first section is connected to the electrode terminal, and the first section abuts against at least one of the liquid retaining layers.

In the above technical solution, the tab includes a first section located on a side of the liquid retaining layer facing the wall part in the thickness direction of the wall part. For the battery cell adopting this structure, on the one hand, it is convenient for the tab to be connected to the electrode terminal provided on the wall part through the first section, which is beneficial to reduce the difficulty in assembling; on the other hand, by the first section abutting against the at least one liquid retaining layer, the electrolytic solution stored in the liquid retaining layer can climb into the main body of the electrode assembly through the capillary phenomenon of the tab, so as to improve the reflux effect of the electrolytic solution in the liquid retaining layer, thereby effectively enhancing the wetting effect of the electrolytic solution on the main body of the electrode assembly, which is beneficial to improve the use performance of the battery cell.

In some embodiments, the tab further includes a second section and a third section, where the first section, the second section and the third section are connected in succession, the third section is connected to the main body, and the third section is located at the side of the support frame facing the main body.

In the above technical solutions, the tab consists of the first section, the second section and the third section connected in succession, the third section is connected to the main body and located at the side of the support frame facing the main body, and the first section is located at the side of the liquid retaining layer facing the wall part and connected to the electrode terminal, such that the tab has a portion located at the side of the liquid retaining layer facing the wall part, enabling simple structure and easy realization.

In some embodiments, in a first direction, the second section is located at one end of the support frame, and the first direction is perpendicular to the thickness direction of the wall part.

In the above technical solution, by providing the second section of the tab to be located at one end of the support frame in the first direction, the tab is in a structure bending around the support frame, so as to realize that the first section and the third section of the tab are located at two sides of the support frame in the thickness direction of the wall part. For the battery cell of such structure, the difficulty in manufacturing the tab and the difficulty in assembling the tab to the support frame are reduced.

In some embodiments, the battery cell includes two electrode assemblies; and in the first direction, the main bodies of the two electrode assemblies are stacked, and the second sections of the tabs with the same polarity of the two electrode assemblies are located at two ends of the support frame, respectively.

In the above technical solutions, the battery cell is provided with two electrode assemblies stacked in the first direction, and the second sections of the tabs with the same polarity of the two electrode assemblies are located at two ends of the support frame in the first direction, respectively. That is, the tabs of the two electrode assemblies bend respectively around the two ends of the support frame in the first direction, so as to achieve that the two electrode assemblies share one support frame while achieving that the first sections of the tabs of the two electrode assemblies are both located at the sides of the liquid retaining layers facing the wall part, and facilitate reducing the difficulty in assembling the tabs of the two electrode assemblies to the support frame.

In some embodiments, the battery cell further includes at least one current collecting member which is connected to the electrode terminal and the first sections, where in the thickness direction of the wall part, the first sections are located between the at least one current collecting member and the at least one liquid retaining layer.

In the above technical solution, the battery cell is further provided with the at least one current collecting member which is connected to the electrode terminal and the first sections of the tabs, and the first sections are provided between the at least one current collecting member and the at least one liquid retaining layer, so as to on the one hand, effectively reduce the connection difficulty between the electrode terminal and the tab to reduce the assembly difficulty of the battery cell, and on the other hand, improve the contact effect between the first sections and the at least one liquid retaining layer, so that the electrolytic solution stored in the liquid retaining layer can climb into the main body of the electrode assembly through the tabs, which is beneficial to improve the wetting effect of the electrode assembly.

In some embodiments, the surface of the tab is a rough surface.

In the above technical solutions, the surface of the tab is provided as the rough surface, to increase the climbing speed at which the electrolytic solution stored in the liquid retaining layer climbs into the main body of the electrode assembly, which is beneficial to further improve the reflux effect of the electrolytic solution stored in the liquid retaining layer flowing back into the main body of the electrode assembly.

In some embodiments, the surface of the tab is provided with a strip-shaped rib.

In the above technical solution, the surface of the tab is provided with the strip-shaped rib, to increase the climbing speed at which the electrolytic solution stored in the liquid retaining layer climbs into the main body of the electrode assembly, which is beneficial to further improve the reflux effect of the electrolytic solution stored in the liquid retaining layer flowing back into the main body of the electrode assembly.

In some embodiments, the battery cell further includes an adhesive layer, and the adhesive layer bonds with the liquid retaining layer and the support frame.

In the above technical solution, the adhesive layer is provided between the liquid retaining layer and the support frame, to make the liquid retaining layer bond to the support frame, so as to reduce the connection difficulty between the liquid retaining layer and the support frame, and improve the connection stability and connection reliability between the liquid retaining layer and the support frame.

In some embodiments, the melting point of the material of the liquid retaining layer is Q, satisfying Q≥40°C.

In the above technical solution, by setting the melting point of the material of the liquid retaining layer to be greater than or equal to 40°C, the melting point of the material of the liquid retaining layer can be greater than or equal to the normal use temperature of the battery cell, thereby reducing the phenomenon that the liquid retaining layer catches fire and burns during use, thereby facilitating the use safety of the battery cell.

In some embodiments, the shell includes a casing and an end cover, where an accommodation cavity with an opening is formed inside the casing, the electrode assemblies are accommodated in the accommodation cavity, the end cover seals the opening, and the end cover is the wall part.

In the above technical solution, the wall part of the shell is the end cover of the shell used for sealing the opening of the casing. For the battery cell of this structure, it is convenient to assemble the electrode terminals and helps to reduce the assembly difficulty between the electrode terminals and the tabs, thereby effectively improving the production efficiency of the battery cell.

In some embodiments, the shell includes a casing and an end cover; the casing includes a side wall and the wall part which are integrally formed, the side wall is provided surrounding the wall part, the side wall has one end connected to the wall part and the other end defining the opening in the thickness direction of the wall part, the side wall and the wall part jointly define the accommodation cavity for accommodating the electrode assemblies, and the end cover seals the opening.

In the above technical solution, the wall part is a wall of the casing that is provided opposite to the end cover in the thickness direction of the wall part. The battery cell adopting such structure can make components such as electrode terminals away from the end cover, and make the wall part and the end cover have no direct connection therebetween, thereby alleviating the phenomenon that the force generated when the components such as the electrode terminals pull or twist the wall part acts on the end cover, thereby reducing the risk of connection failure between the end cover and the casing, which is beneficial to further reduce the risk of leakage of the battery cell during use.

In a second aspect, embodiments of the present application further provide a battery, including at least one battery cell above.

In a third aspect, embodiments of the present application further provide an electric device, including at least one battery above.

### Brief Description of Drawings

In order to illustrate the technical solutions of the embodiments of the present application more clearly, the drawings required to be used in the embodiments will be briefly introduced below. It should be understood that the drawings below only show some embodiments of the present application and thus should not be construed as limiting the scope. Those of ordinary skill in the art may also obtain other drawings based on the drawings without paying creative efforts.
FIG. 1 is a schematic structural diagram of a vehicle provided by some embodiments of the present application;
FIG. 2 is a structural exploded view of a battery provided by some embodiments of the present application;
FIG. 3 is a schematic structural diagram of a battery cell provided by some embodiments of the present application;
FIG. 4 is a structural exploded view of a battery cell provided by some embodiments of the present application;
FIG. 5 is a sectional view of a battery cell provided by some embodiments of the present application;
FIG. 6 is a local enlarged view of part A of the battery cell shown in FIG. 5;
FIG. 7 is a schematic assembling diagram of a support frame and liquid retaining layers provided by some embodiments of the present application; and
FIG. 8 is a structural exploded view of a support frame and liquid retaining layers provided by some embodiments of the present application.

Reference signs: 1000-vehicle; 100-battery; 10-box; 11-first box body; 12-second box body; 20-battery cell; 21-shell; 211-wall part; 212-casing; 2121-accommodation cavity; 2122-opening; 213-end cover; 22-electrode terminal; 23-electrode assembly; 231-main body; 232-tab; 2321-first section; 2322-second section; 2323-third section; 24-support frame; 241-groove; 242-through hole; 25-liquid retaining layer; 26-pressure relief mechanism; 27-current collecting member; 28-insulating member; 200-controller; 300-motor; X-thickness direction of wall part; Y-first direction; Z-second direction.

### Detailed Description of Embodiments

In order to make the purposes, technical solutions and advantages of the embodiments of the present application clearer, the technical solutions in the embodiments of the present application will be clearly described below in conjunction with the drawings in the embodiments of the present application. Obviously, the described embodiments are some, not all of the embodiments of the present application. Based on the embodiments in the present application, all other embodiments obtained by those of ordinary skill in the art without paying creative efforts fall within the scope of protection of the present application.

Unless otherwise defined, all technical and scientific terms used in the present application have the same meanings as commonly understood by those skilled in the art of the present application; the terms used in the description of the present application are for the purpose of describing specific examples only and are not intended to limit the present application; the terms "including" and "having" and any variations thereof in the description and claims of the present application and the above description of the drawings are intended to cover non-exclusive inclusion. The terms "first", "second", etc. in the description and claims of the present application or the above-mentioned drawings are used to distinguish different objects, rather than to describe a specific order or priority relationship.

Reference made herein to "embodiment/example" means that a particular feature, structure, or characteristic described in connection with the embodiment may be included in at least one embodiment/example of the present application. The phases occurring in various places in the specification do not necessarily all refer to the same embodiment, nor are separate or alternative embodiments mutually exclusive of other embodiments.

In the description of the present application, it should be indicated that unless otherwise clearly specified and limited, technical terms such as "install", "link", "connect" and "attach" should be understood in a broad sense, for example, it may be a fixed connection, or a detachable connection, or an integral connection; it may be a direct connection, or an indirect connection through an intermediary, or it may be an internal communication between two elements. Those of ordinary skill in the art may understand the specific meanings of the above terms in the present application according to specific situations.

The term "and/or" in the present application indicates only an association relationship describing associated objects, meaning that there may be three kinds of relationships. For example, A and/or B may indicate three situations: there is only A, there are both A and B, and there is only B. In addition, the character "/" in the present application generally indicates that the associated objects therebefore and thereafter have an "or" relationship.

In the embodiments of the present application, the same reference signs represent the same components, and for the sake of simplicity, detailed descriptions of the same components in different embodiments are omitted. It should be understood that the thickness, length, width and other dimensions of various components, as well as the overall thickness, length, width and other dimensions of the integrated device, in the embodiments of the present application shown in the drawings are only illustrative and should not constitute any limitation to the present application.

"Plurality/multiple" appearing in the present application means two or more (including two).

In the embodiment of the present application, the battery cell may be a secondary battery. A secondary battery refers to a battery cell that can be continuously used by charging to activate active materials, after the battery cell is discharged.

The battery cell may be lithium ion battery, sodium ion battery, sodium-lithium ion battery, lithium metal battery, sodium metal battery, lithium-sulfur battery, magnesium ion battery, nickel-hydrogen battery, nickel-cadmium battery, lead storage battery, etc., which is not limited in the embodiments of the present application.

The battery cell generally includes at least one electrode assembly. The electrode assembly includes a positive electrode, a negative electrode and a separation member. During charging and discharging of a battery cell, active ions (such as lithium ions) are inserted and de-inserted back and forth between the positive and negative electrodes. The separation member is disposed between the positive electrode and the negative electrode, which can prevent the positive and negative electrodes from short-circuiting and simultaneously allow the active ions to pass therethrough.

In some embodiments, the positive electrode may be a positive electrode sheet which may include a positive current collector and a positive electrode active material disposed on at least one surface of the positive current collector.

As an example, the positive current collector has two surfaces opposite to each other in its thickness direction, and the positive electrode active material is disposed on either or both of the two surfaces of the positive current collector opposite to each other.

As an example, the positive current collector may be a metal foil or a composite current collector. For example, as the metal foil, surface-treated aluminum or stainless steel with silver, stainless steel, copper, aluminum, nickel, carbon electrode, carbon, nickel or titanium or the like may be used. The composite current collector may include a polymer material base layer and a metal layer. The composite current collector may be formed by forming a metal material (aluminum, aluminum alloy, nickel, nickel alloy, titanium, titanium alloy, silver and silver alloy, etc.) on a polymer material substrate (such as a substrate of polypropylene, polyethylene terephthalate, polybutylene terephthalate, polystyrene, polyethylene, etc.).

As an example, the positive electrode active material may include at least one of the following materials: lithium-containing phosphate, lithium transition metal oxide, and their respective modified compounds. However, the present application is not limited to these materials, and other traditional materials that can be used as positive electrode active materials for batteries may also be used. Only one of these positive electrode active materials may be used. Or a combination of two or more of them may be used. In the above, examples of lithium-containing phosphate may include, but are not limited to, at least one of lithium iron phosphate (such as LiFePO4 (also referred to as LFP)), composite material of lithium iron phosphate and carbon, lithium manganese phosphate (such as LiMnPO4), composite material of lithium manganese phosphate and carbon, lithium iron manganese phosphate, and composite material of lithium iron manganese phosphate and carbon.

In some embodiments, the negative electrode may be a negative electrode sheet which may include a negative current collector.

As an example, the negative current collector may be a metal foil, a foam metal, or a composite current collector. For example, as the metal foil, surface-treated aluminum or stainless steel with silver, stainless steel, copper, aluminum, nickel, carbon electrode, carbon, nickel or titanium or the like may be used. The foam metal may be nickel foam, copper foam, aluminum foam, alloy foam, or carbon foam, etc. The composite current collector may include a polymer material base layer and a metal layer. The composite current collector may be formed by forming a metal material (copper, copper alloy, nickel, nickel alloy, titanium, titanium alloy, silver and silver alloy, etc.) on a polymer material substrate (such as a substrate of polypropylene, polyethylene terephthalate, polybutylene terephthalate, polystyrene, polyethylene, etc.).

As an example, the negative electrode sheet may include a negative current collector and a negative electrode active material disposed on at least one surface of the negative current collector.

As an example, the negative current collector has two surfaces opposite to each other in its thickness direction, and the negative electrode active material is disposed on either or both of the two surfaces of the negative current collector opposite to each other.

As an example, the negative electrode active material may be a negative electrode active material for a battery cell well known in the art. As an example, the negative electrode active material may include at least one of the following materials: artificial graphite, natural graphite, soft carbon, hard carbon, silicon-based material, tin-based material, lithium titanate, etc.

In some embodiments, the material of the positive current collector may be aluminum, and the material of the negative current collector may be copper.

In some embodiments, the electrode assembly further includes a separation member, which is disposed between the positive electrode and the negative electrode.

In some embodiments, the separation member is a separator. The present application has no particular limitation on the type of separator, and any well-known porous separator with good chemical stability and mechanical stability may be selected.

As an example, the main material of the separator may be at least one selected from glass fiber, non-woven fabric, polyethylene, polypropylene, polyvinylidene fluoride, and ceramic.

In some embodiments, the separation member is solid electrolyte. The solid electrolyte is arranged between the positive electrode and the negative electrode, and plays the role of transporting ions and isolating the positive electrode from negative electrode.

In some embodiments, the battery cell further includes an electrolyte, which plays a role in conducting ions between the positive electrode and negative electrode. The present application has no particular limitation on the type of electrolyte, which can be selected according to needs. The electrolyte may be liquid, gelatinous or solid.

In some embodiments, the electrode assembly is in a wound structure. The positive electrode sheet and the negative electrode sheet are wound into the wound structure.

In some embodiments, the electrode assembly is in a laminated structure.

In some embodiments, the shape of the electrode assembly may be cylindrical, flat, or polygonal, etc.

In some embodiments, the electrode assembly is provided with tabs which can conduct current out from the electrode assembly. The tabs include a positive tab and a negative tab.

In some embodiments, the battery cell may include a shell. The shell is used to package components such as the electrode assembly and the electrolyte. The shell may be a steel shell, an aluminum shell, a plastic shell (such as polypropylene), a composite metal shell (such as a copper-aluminum composite shell) or an aluminum-plastic film, etc.

As an example, the battery cell may be a cylindrical battery cell, a prismatic battery cell, a soft-pack battery cell or a battery cell of other shapes, the prismatic battery cell includes a square-shell battery cell, a blade-shaped battery cell, a multi-prismatic battery, and the multi-prismatic battery is, for example, a hexagonal battery, etc., which are not specifically limited in the present application.

The battery mentioned in embodiments of the present application refers to a single physical module that includes one or more battery cells to provide higher voltage and capacity.

In some embodiments, the battery may be a battery module. When there are multiple battery cells, the multiple battery cells are arranged and fixed to form a battery module.

In some embodiment, the battery may be a battery pack. The battery pack includes a box and battery cell(s), and the battery cell(s) or the battery module is accommodated in the box.

In some embodiments, the box may be provided as a portion of the chassis structure of the vehicle. For example, a portion of the box may become at least a portion of the floor of the vehicle, or a portion of the box may become at least a portion of the cross beams and the longitudinal beams of the vehicle.

In some embodiments, the battery cell may be an energy storage device. The energy storage device includes an energy storage container, an energy storage cabinet, etc.

The battery, which has outstanding advantages such as high energy density, low environmental pollution, high power density, long service life, wide application range, and small self-discharge coefficient, is an important part of the development of new energy today. However, with the continuous development of battery technology, higher requirements are also put forward for the use safety of battery.

The inventors have discovered that for a general battery cell, the shell of the battery cell usually includes a casing and an end cover, and the end cover covers the opening of the casing. In order to facilitate the assembly of the battery cell, the electrode terminal is usually assembled to the end cover of the battery cell, so that when the end cover covers the casing, the electrode terminal, the current collecting member and the tabs of the electrode assembly may be stacked and welded to each other first to achieve electrical connection between the electrode terminal and the electrode assembly, so that the electrode terminal is used as the output electrode of the battery cell to achieve inputting or outputting of electric energy for the battery cell, and finally the end cover is connected to the casing. However, when a battery cell of this structure is used upside down, that is, when one end of the battery cell provided with the electrode terminal is provided and used facing downwards in a vertical direction, and used, the electrolytic solution may be free between the current collecting member and the end cover. Moreover, because there are weak points or welding points between the electrode terminal and the end cover and between the end cover and the casing, when the battery cell is impacted, the electrolytic solution inside the battery cell is very likely to flow out from the weak points or welding points between the electrode terminal and the end cover and between the end cover and the casing, thereby causing the phenomenon that the electrolytic solution in the battery cell leaks, resulting in a greater safety hazard during the use of the battery cell.

Based on the above consideration, in order to solve the problems of great potential safety hazards of a battery cell during use, the inventors have designed a battery cell after in-depth researches. The battery cell includes a shell, electrode terminals, electrode assemblies, a support frame and liquid retention layers. The shell has a wall part, and the electrode terminals are provided at the wall part. The electrode assemblies are accommodated in the shell. The electrode assembly has a main body and tabs. In the thickness direction of the wall part, the tabs protrude from an end of the main body facing the wall part and is connected to the electrode terminals. In the thickness direction of the wall part, the support frame is provided between the wall part and the main body. The support frame is configured to support the main body. The liquid retaining layers are provided at the support frame, and the liquid retaining layers are configured to absorb and store the electrolytic solution in the shell.

In the battery cell of this structure, the support frame is provided between the wall part and the main body, and the support frame may support the main body of the electrode assembly, that is, the battery cell is provided inverted, such that the wall part of the battery cell provided with the electrode assembly is provided facing downwards, to make the end of the electrode assembly provided with the tabs face downwards, so as to enable the support frame to alleviate the situation where local stress occurs on the main body of the electrode assembly, to reduce the risk of damage to the main body of the electrode assembly. By providing the liquid retaining layers on the support frame, the liquid retaining layers can absorb and store the electrolytic solution located at the bottom of the shell and free between the support frame and the wall part. Therefore, when the bottom of the battery cell is damaged by impact, the phenomenon of the electrolytic solution flowing out of the shell can be alleviated, and the outflow amount of the electrolytic solution can be reduced, which is beneficial to reduce the use risk of the battery cell caused by leakage during use and further can effectively improve the use safety of the battery cell.

The battery cell disclosed in the embodiments of the present application can be used in, but is not limited to, vehicles, ships, aircraft or other electric devices. The power supply system of the electric device, composed of battery cells, batteries, etc., disclosed in the present application, may be used. In this way, it is beneficial to alleviate the problem of electrolytic solution leakage during the use of the battery cell, so as to improve the use safety of the battery cell.

Embodiments of the present application provide an electric device using the battery as the power supply. The electric device may be, but not limited to a mobile phone, a panel computer, a notebook computer, an electric toy, an electric tool, an electric power cart, an electric vehicle, a ship, a spacecraft or the like. In the above, the electric toy includes a fixed or mobile electric toy, such as a game console, an electric car toy, an electric ship toy, or an electric aircraft toy. The spacecraft may include an airplane, a rocket, a space shuttle, a spaceship, or the like.

For convenient description, the following embodiments are described by taking a vehicle 1000 as an electric device as example.

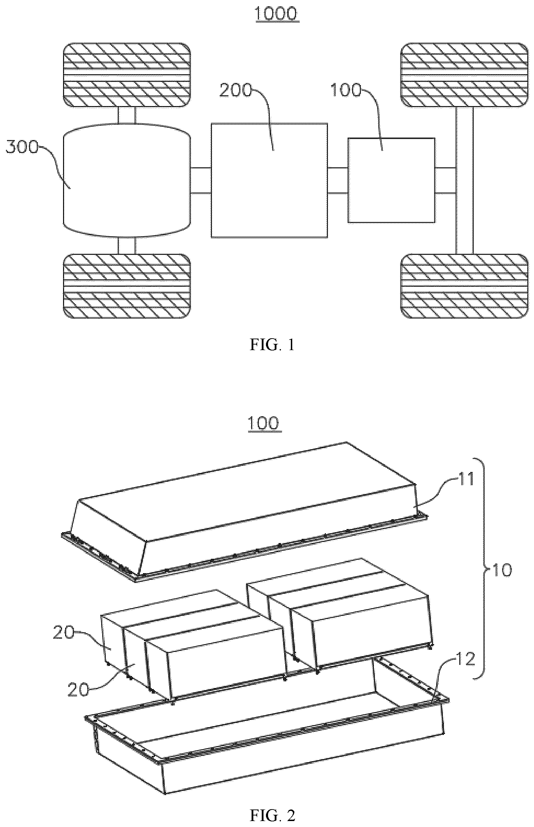

Referring to FIG. 1, FIG. 1 is a schematic structural diagram of a vehicle 1000 provided by some embodiments of the present application. The vehicle 1000 may be an oil-fueled vehicle, a gas vehicle, or a new energy vehicle. The new energy vehicle may be a pure electric vehicle, a hybrid electric vehicle, an extended-range vehicle, or the like. A battery 100 is disposed inside the vehicle 1000, and the battery 100 may be disposed at a bottom of the vehicle 1000, disposed at a head of the vehicle 1000, or disposed at a tail of the vehicle 1000. The battery 100 may be used for supplying power to the vehicle 1000. For example, the battery 100 may be used as an operation power supply or a use power supply of the vehicle 1000. The vehicle 1000 may further include a controller 200 and a motor 300. The controller 200 is used for controlling the battery 100 to supply power to the motor 300, for example, for a working power demand of the vehicle 1000 during startup, navigation and running.

In some embodiments of the present application, the battery 100 may be used not only as an operation power supply or a use power supply of the vehicle 1000, but also as a driving power supply of the vehicle 1000 to replace or partially replace fuel or natural gas to provide driving power for the vehicle 1000.

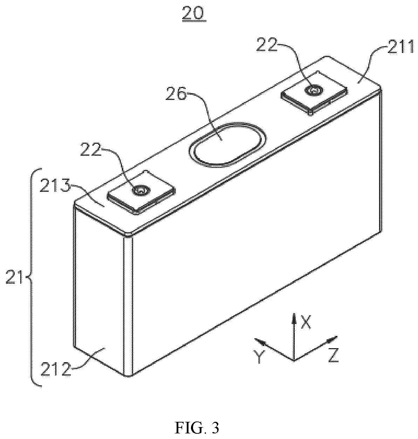

Referring to FIG. 2 and FIG. 3, FIG. 2 is a structural exploded view of a battery cell 100 provided by some embodiments of the present application; and FIG. 3 is a schematic structural diagram of a battery cell 20 provided by some embodiments of the present application. The battery 100 includes a box 10 and battery cells 20, and the battery cells 20 are accommodated in the box 10.

In the above, the box 10 is used to provide an assembly space for the battery cells 20, and the box 10 may be in a variety of structures. In some embodiments, the box 10 may include a first box body 11 and a second box body 12. The first box body 11 and the second box body 12 cover each other. The first box body 11 and the second box body 12 jointly define the assembly space for accommodating the battery cells 20. The second box body 12 may be in a hollow structure with one side open, and the first box body 11 may be in a plate-like structure. The first box body 11 covers the open side of the second box body 12, so that the first box body 11 and the second box body 12 jointly define an assembly space; and the first box body 11 and the second box body 12 may also be both in a hollow structure with one side open, and the open side of the first box body 11 covers the open side of the second box body 12. Of course, the box 10 formed by the first box body 11 and the second box body 12 may be in various shapes, such as a cylinder, a cuboid and so on. Exemplarily, in FIG. 2, the box 10 is in the shape of a cuboid.

In the battery 100, there may be one or more battery cells 20 provided in the box 10. If there are multiple battery cells 20 provided in the box 10, the multiple battery cells 20 may be in serial, parallel or hybrid connection with each other. The hybrid connection means that the multiple battery cells 20 are connected with each other both in series and in parallel. The multiple battery cells 20 may be in serial, parallel or hybrid connection with each other, and then the whole composed of the multiple battery cells 20 is accommodated in the box 10. Certainly, the battery 100 may be formed in the way that the multiple battery cells 20 are first in serial or in parallel or in hybrid connection with each other to form battery modules, and then the multiple battery modules are in serial or in parallel or in hybrid connection with each other to form a whole, and accommodated in the box 10. The battery 100 may further include other structures. For example, the battery 100 may further include a busbar component for connecting the multiple battery cells 20, to realize electrical connection between the multiple battery cells 20.

In the above, each battery cell 20 may be a secondary battery or a primary battery; and may also be a lithium-sulfur battery, a sodium-ion battery or a magnesium-ion battery, but is not limited thereto. The battery cell 20 may be in a shape of cylinder, flat body, cuboid or in other shape. Exemplarily, in FIG. 3, the battery cell 20 is in a cuboid structure.

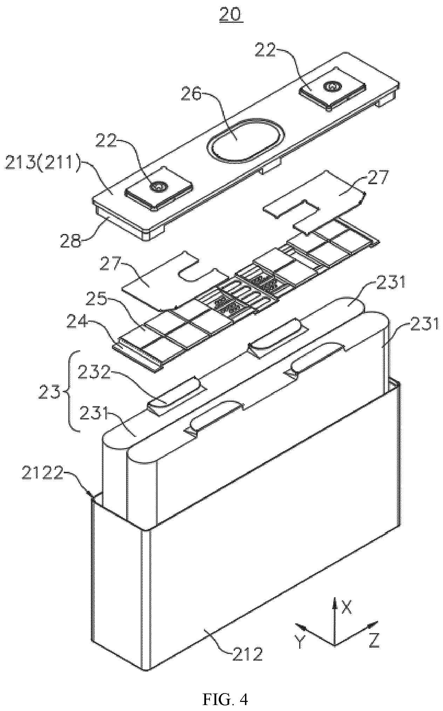

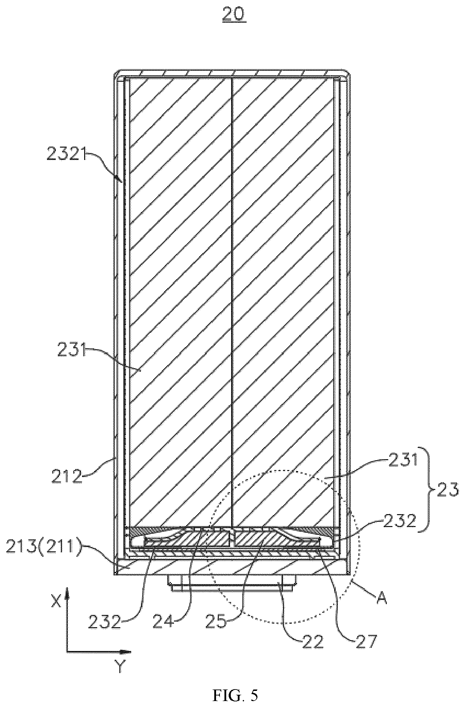

According to some embodiments of the present application, referring to FIG. 3, and further referring to FIG. 4 and FIG. 5, FIG. 4 is a structural exploded view of a battery cell 20 provided by some embodiments of the present application; and FIG. 5 is a sectional view of a battery cell 20 provided by some embodiments of the present application. The present application provides a battery cell 20. The battery cell 20 includes a shell 21, electrode terminals 22, electrode assemblies 23, a support frame 24 and liquid retaining layers 25. The shell 21 has a wall part 211, and the electrode terminals 22 are provided at the wall part 211. The electrode assemblies 23 are accommodated in the shell 21. The electrode assembly 23 has a main body 231 and tabs 232. In the thickness direction X of the wall part, the tabs 232 protrude from an end of the main body 231 facing the wall part 211 and connected to the electrode terminal 22. In the thickness direction X of the wall part, the support frame 24 is provided between the wall part 211 and the main body 231. The support frame 24 is configured to support the main body 231. The liquid retaining layers 25 are provided at the support frame 24, and the liquid retaining layers 25 are configured to absorb and store the electrolytic solution in the shell 21.

In the above, the shell 21 may be further used to accommodate the electrolytic solution. The shell 21 may be in various structural form, such as a cylinder, a cuboid and so on. Similarly, the shell 21 may be made of a variety of materials, such as copper, iron, aluminum, steel, aluminum alloy, etc.

In some embodiments, the shell 21 may include a casing 212 and an end cover 213, where an accommodation cavity 2121 is formed inside the casing 212, and the accommodation cavity 2121 is used to accommodate the electrode assemblies 23, and the accommodation cavity 2121 has an opening 2122, that is, the casing 212 is in a hollow structure with an opening 2122 at one end, and the end cover 213 covers the opening 2122 of the casing 212 and forms a sealed connection to form a sealed space for accommodating the electrode assemblies 23 and the electrolyte.

It should be noted that the wall part 211 for mounting the electrode terminals 22 may be the end cover 213 or a wall of the casing 212. Exemplarily, in FIG. 3 and FIG. 4, the wall part 211 is the end cover 213. Certainly, the structure of the battery cell 20 is not limited thereto. In other embodiments, the wall part 211 may also be a bottom wall of the casing 212 provided opposite to the end cover 213, or a side wall of the casing 212 adjacent to and abutting against the end cover 213.

When assembling the battery cell 20, the electrode assemblies 23 may be placed in the casing 212 first, followed by filling the electrolytic solution into the casing 212 and then making the end cover 213 cover the opening 2122 of the casing 212, to complete the assembly of the battery cell 20.

The casing 212 may be in various shapes, such as a cylinder, a cuboid, or polygonal/prismatic structure and so on. The shape of the casing 212 may be determined by the specific shape of the electrode assembly 23. For example, if the electrode assembly 23 is in a cylinder structure, the casing 212 may be selected to be in a cylinder structure; and if the electrode assembly 23 is in a cuboid structure, the casing 212 may be selected to be in a cuboid structure. Certainly, the end cover 213 may be in various structures. For example, the end cover 213 is a plate-like structure or a hollow structure with one end open, or the like. Exemplarily, in FIG. 3, the battery cell 212 is in a cuboid structure.

Certainly, it can be understood that the shell 21 is not only limited to the above structure. The shell 21 may also be in other structure. For example, the shell 21 may include a casing 212 and two end covers 213. The casing 212 is a hollow structure with openings 2122 at opposite sides thereof. One end cover 213 correspondingly covers one opening 2122 of the casing 212 and forms a sealed connection to form a sealed space for accommodating the electrode assemblies 23 and the electrolyte. That is, the casing 212 is provided with openings 2122 at opposite sides thereof, and the two end covers 213 respectively covers the two sides of the casing 212 to seal the corresponding openings 2122.

It should be indicated that the electrode assembly 23 is a component in the battery cell 20 where electrochemical reactions occur. The main body 231 of the electrode assembly 23 may include a positive electrode sheet, a negative electrode sheet, and a separator. In the above, the electrode assembly 23 may be in various structures. For example, the main body 231 of the electrode assembly 23 may be a wound structure formed by winding the positive electrode sheet, the separator and the negative electrode sheet, or may be in a laminated structure formed by stacking the positive electrode sheet, the separator and the negative electrode sheet. The tab 232 of the electrode assembly 23 is a component formed by stacking and connecting the regions of the positive electrode sheet not coated with the positive electrode active material layer or a component formed by stacking and connecting the regions of the negative electrode sheet not coated with the negative electrode active material layer.

Optionally, there may be one or more electrode assemblies 23 accommodated in the shell 21. Exemplarily, in FIG. 4, the shell 21 of the battery cell 20 is provided with two electrode assemblies 23, and the main bodies 231 of the two electrode assemblies 23 are stacked in the first direction Y, that is, the main bodies 231 of the two electrode assemblies 23 are stacked in the thickness direction of the main bodies 231, that is, the main bodies 231 of the two electrode assemblies 23 are stacked in the thickness direction of the battery cell 20. Certainly, in other embodiments, the electrode assemblies 23 accommodated in the shell 21 may also be stacked and in number of one, three, four, five, six, seven, etc.

The tab 232 protrudes from one end of the main body 231 facing the wall part 211, that is, the tab 232 is connected to one end of the main body 231 close to the wall part 211 in the thickness direction X of the wall part. In other words, the tab 232 is formed at one end of the electrode assembly 23 close to the wall part 211 in the thickness direction X of the wall part. The tab 232 is used to be connected to the electrode terminal 22 to implement inputting or outputting of electric energy for the battery cell 20.

Exemplarily, in FIG. 4, each electrode assembly 23 has two tabs 232, and both tabs 232 protrude from one end of the main body 231 facing the wall part 211 in the thickness direction X of the wall part. The two tabs 232 are respectively used to output or input the positive electrode and the negative electrode of the electrode assembly 23. If the tab 232 is used to output the positive electrode of the electrode assembly 23, the tab 232 is a component formed by stacking and connecting the regions of the positive electrode sheet not coated with the positive electrode active material layer; and if the tab 232 is used to output the negative electrode of the electrode assembly 23, the tab 232 is a component formed by stacking and connecting the regions of the negative electrode sheet not coated with the negative electrode active material layer.

Correspondingly, the battery cell 20 includes two electrode terminals 22, the two electrode terminals 22 are both mounted on the wall part 211, and the two electrode terminals 22 are respectively connected to the two tabs 232 of each electrode assembly 23 to realize inputting or outputting of the positive electrode and the negative electrode of the battery cell 20.

In the above, the electrode terminal 22 may be connected to the tab 232 by various ways, which may be a direct connection, such as welding, snapping or abutting, or an indirect connection, that is, the tab 232 is connected to other components and then is welded to, snapped into or abuts against the electrode terminal 22. Similarly, the electrode terminal 22 may be made of a variety of materials, such as copper, iron, aluminum, steel, aluminum alloy, etc.

It should be noted that the electrode terminal 22 is insulated and installed on the wall part 211, that is, there is no electrical connection formed between the electrode terminal 22 and the wall part 211. That is, there is no electrical connection formed between the electrode terminal 22 and the end cover 213 of the shell 21.

In the thickness direction X of the wall part, the support frame 24 is configured to support the main body 231. That is, as shown in FIG. 5, the battery cell 20 is placed upside down in the box 10, so that the support frame 24 may support the main body 231 of the electrode assembly 23 in the thickness direction X of the wall part to play the supporting role. That is, the end of the battery cell 20 provided with the electrode terminal 22 is provided facing the bottom of the box 10 in the thickness direction X of the wall part, or in actual use, the end of the battery cell 20 provided with the electrode terminal 22 is provided facing the ground or downwards, so that the thickness direction X of the wall part is the up-down direction.

Exemplarily, the support frame 24 may be made of various materials, such as rubber, silicone, or plastic, etc.

In the above, the liquid retaining layers 25 are disposed on the support frame 24. The liquid retaining layers 25 may be disposed between the support frame 24 and the wall part 211 in the thickness direction X of the wall part, or between the support frame 24 and the main body 231 in the thickness direction X of the wall part. Exemplarily, in FIG. 4 and FIG. 5, the liquid retaining layers 25 are disposed between the support frame 24 and the wall part 211 in the thickness direction X of the wall part. That is, the liquid retaining layers 25 are connected to the side of the support frame 24 facing the wall part 211 in the thickness direction X of the wall part.

Exemplarily, the liquid retaining layers 25 may be connected with the support frame 24 in various ways, such as bonding, snapping, or bolting, etc. The liquid retaining layer 25 has the function of absorbing and storing the electrolytic solution. Similarly, the liquid retaining layer 25 may be made of various materials, such as foam or water-absorbing resin, etc.

In some embodiments, as shown in FIG. 3 and FIG. 4, the battery cell 20 may further include a pressure relief mechanism 26. The pressure relief mechanism 26 is mounted on the shell 21. Optionally, the pressure relief mechanism 26 may be disposed on the end cover 213 or may be provided on the casing 212. The pressure relief mechanism 26 is used to release the internal pressure of the battery cell 20 when the internal pressure or temperature of the battery cell 20 reaches a predetermined value.

Exemplarily, the pressure relief mechanism 26 is disposed on the end cover 213. The pressure relief mechanism 26 may be a pressure relief component such as an explosion-proof valve, an explosion-proof sheet, an air valve, a pressure relief valve or a safety valve, etc.

The support frame 24 is provided between the wall part 211 and the main body 231, and the support frame 24 may support the main body 231 of the electrode assembly 23 to play the supporting role, that is, the battery cell 20 is provided inverted, such that the wall part 211 of the battery cell 20 provided with the electrode assembly 22 is provided facing downwards, to make the end of the electrode assembly 23 provided with the tabs 232 face downwards, so as to enable the support frame 24 to alleviate the situation where local stress occurs on the main body 231 of the electrode assembly 23, to reduce the risk of damage to the main body 231 of the electrode assembly 23. By providing the liquid retaining layer 25 on the support frame 24, the liquid retaining layer 25 can absorb and store the electrolytic solution located at the bottom of the shell 21 and free between the support frame 24 and the wall part 211. Therefore, when the bottom of the battery cell 20 is damaged by impact, the phenomenon of the electrolytic solution flowing out of the shell 21 can be alleviated, and the outflow amount of the electrolytic solution can be reduced, which is beneficial to reduce the use risk of the battery cell 20 caused by leakage during use and further can effectively improve the use safety of the battery cell 20.

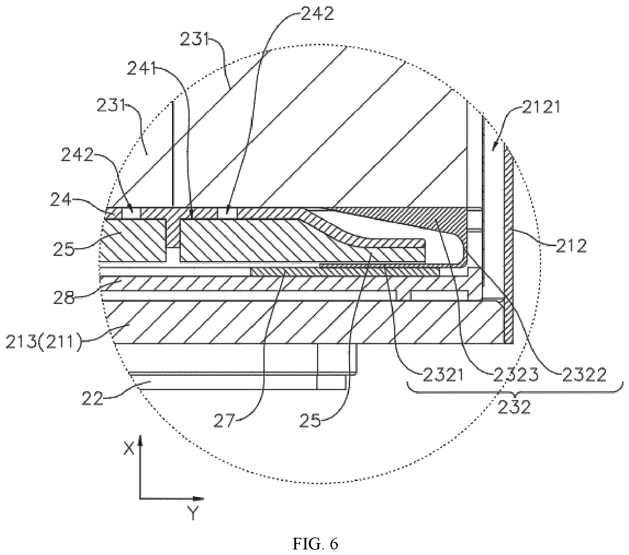

According to some embodiments of the present application, referring to FIG. 4 and FIG. 5 and further referring to FIG. 6, FIG. 6 is a local enlarged view of part A of the battery cell 20 shown in FIG. 5. In the thickness direction X of the wall part, the liquid retaining layer 25 is located between the wall part 211 and the support frame 24.

In the above, the liquid retaining layers 25 are disposed between the wall part 211 and the support frame 24. That is, the liquid retaining layers 25 are provided at one side of the support frame 24 facing the wall part 211 in the thickness direction X of the wall part. It should be noted that in other embodiments, the liquid retaining layers 25 may also be disposed on a side of the support frame 24 away from the wall part 211 in the thickness direction X of the wall part.

By providing the liquid retaining layer 25 between the wall part 211 and the support frame 24, the liquid retaining layer 25 can better absorb and store the electrolytic solution free between the wall part 211 and the support frame 24, so that when the bottom of the battery cell 20 is damaged by impact, the outflow amount of the electrolytic solution free between the wall part 211 and the support frame 24 can be further reduced, to further improve the use safety of the battery cell 20.

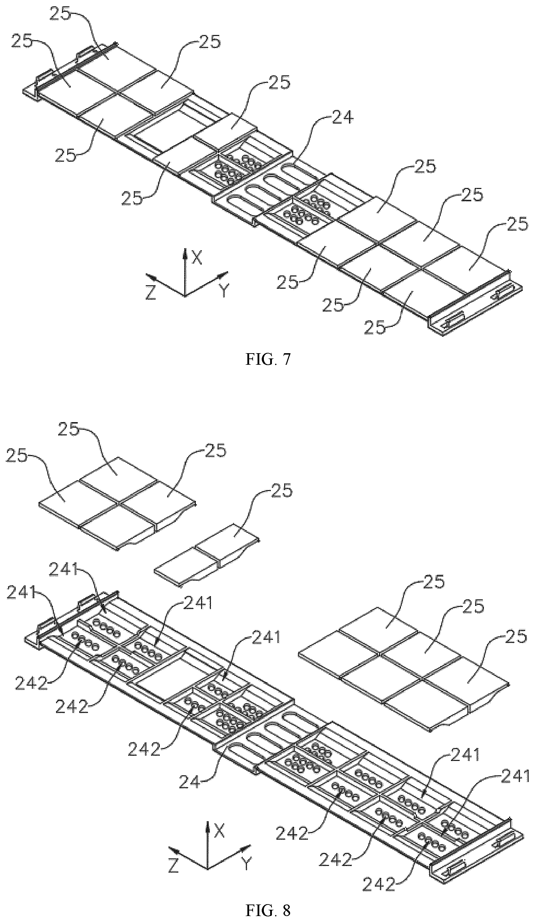

According to some embodiments of the present application, referring to FIG. 6, and further referring to FIG. 7 and FIG. 8, FIG. 7 is a schematic assembling diagram of a support frame 24 and liquid retaining layers 25 provided by some embodiments of the present application; and FIG. 8 is a structural exploded view of a support frame 24 and liquid retaining layers 25 provided by some embodiments of the present application. In the thickness direction X of the wall part, the side of the support frame 24 facing the wall part 211 is provided with a groove 241, and at least a portion of the liquid retaining layer 25 is accommodated in the groove 241.

In the above, at least a portion of the liquid retaining layer 25 is accommodated in the groove 241, that is, in the thickness direction X of the wall part, the liquid retaining layer 25 may be entirely accommodated in the groove 241, or may by only partially accommodated in the groove 241. For example, in FIGS. 6 and 7, a portion of the liquid retaining layer 25 is accommodated in the groove 241, and the other portion extends out of the groove 241 in the thickness direction X of the wall part.

Exemplarily, in FIG. 7 and FIG. 8, a plurality of liquid retaining layers 25 and a plurality of grooves 241 are disposed on the support frame 24, and each liquid retaining layer 25 is disposed in a corresponding groove 241. It should be noted that, in other embodiments, the plurality of liquid retaining layers 25 may also be in an integral structure, that is, only one liquid retaining layer 25 and one groove 241 are provided on the support frame 24, and the liquid retaining layer 25 is laid flat in the groove 241 on the side of the support frame 24 facing the wall part 211.

By providing the groove 241 for accommodating the liquid retaining layer 25 on the side of the support frame 24 facing the wall part 211, the liquid retaining layer 25 may be provided in the groove 241 of the support frame 24, thereby optimizing the space occupied by the liquid retaining layer 25 inside the battery cell 20, which is beneficial to improve the internal space utilization rate of the battery cell 20 and further effectively improve the energy density of the battery cell 20.

According to some embodiments of the present application, referring to FIGS. 6 and 8, the support frame 24 is provided with a through hole 242, and the through hole 242 communicates with the groove 241 and the internal space of the shell 21.

In the above, the through hole 242 communicates with the groove 241 and the internal space of the shell 21. That is, the groove bottom wall or the groove side wall of the groove 241 is provided with the through hole 24, and the through hole 242 extends through the support frame 24, so that the through hole 242 can communicate with the groove 241 and the internal space of the shell 21.

The support frame 24 is provided with a through hole 242, the through hole 242 communicates with the groove 241 of the support frame 24 and the internal space of the shell 24, so that the electrolytic solution in the liquid retaining layer 25 located in the groove 241 can flow back to the interior of the shell 21 through the through hole 242, facilitating the main body 231 of the electrode assembly 23 coming into contact with the electrolytic solution stored in the liquid retaining layer 25, thereby enhancing the wetting effect of the electrolytic solution on the main body 231 of the electrode assembly 23, which is beneficial to improve the use performance of the battery cell 20.

In some embodiments, continuing to refer to FIG. 6 and FIG. 8, the through hole 242 is provided at the groove bottom wall of the groove 241, and the through hole 242 extends through the groove bottom wall of the groove 241 in the thickness direction X of the wall part.

Optionally, there may be one or more through holes 242 provided on the groove bottom wall of the groove 241. Exemplarily, in FIG. 8, the groove bottom wall of each groove 241 is provided with multiple through holes 242.

The through hole 242 is provided at the groove bottom wall of the groove 241, and the through hole 242 extends through two sides of the groove bottom wall of the groove 241, such that the electrolytic solution stored in the liquid retaining layer 25 can directly contact the main body 231 located at the side of the support frame 24 away from the wall part 211, after flowing back to the interior of the shell 21 through the through hole 242, thereby facilitating the wetting effect of the electrode assembly 23.

In some embodiments, referring to FIG. 7 and FIG. 8, the battery cell 20 includes multiple liquid retaining layer 25, and in the thickness direction X of the wall part, the side of the support frame 24 facing the wall part 211 is provided with multiple grooves 241, and each of the liquid retaining layers 25 is provided in a corresponding groove 241.

The multiple liquid retaining layers 25 are provided between the support frame 24 and the wall part 211, and each liquid retaining layer 25 is provided in a corresponding groove 241. The battery cell 20 of such structure can on the one hand improve the effect of the battery cell 20 absorbing and storing the electrolytic solution through the liquid retaining layers 25, so as to further reduce the outflow amount of the electrolytic solution free between the wall part 211 and the support frame 24 when the bottom of the battery cell 20 is impacted and damaged; and on the other hand, can play a certain role of positioning and limiting each liquid retaining layer 25, so that the multiple liquid retaining layers 25 are all provided on the support frame 24, which is beneficial to reduce the difficulty in assembling the multiple liquid retaining layers 25 onto the support frame 24 and alleviate the phenomenon of shaking of the liquid retaining layers 25 in the battery cell 20.

According to some embodiments of the present application, referring to FIG. 5 and FIG. 6, in the thickness direction X of the wall part, the tab 232 includes a first section 2321 located on a side of the liquid retaining layer 25 facing the wall part 211, the first section 2321 is connected to the electrode terminal 22, and the first section 2321 abuts against at least one of the liquid retaining layers 25.

In the above, the tab 232 includes a first section 2321 located on the side of the liquid retaining layer 25 facing the wall part 211. That is, the tab 232 has a portion located on the side of the liquid retaining layer 25 facing the wall part 211 in the thickness direction X of the wall part, and this portion is the first section 2321 of the tab 232.

The first section 2321 abuts against at least one of the liquid retaining layers 25. That is, the first section 2321 may be in contact with only one liquid retaining layer 25 among the plurality of liquid retaining layers 25, or may be in contact with a plurality of liquid retaining layers 25.

It should be noted that the first section 2321 is connected to the electrode terminal 22, and the first section 2321 may be connected to the electrode terminal 22 by various ways, which may be a direct connection, such as welding, snapping or abutting, or an indirect connection, that is, the first section 2321 is connected to other components and then is welded to, snapped into or abuts against the electrode terminal 22.

The tab 232 includes a first section 2321 located on a side of the liquid retaining layer 25 facing the wall part 211 in the thickness direction X of the wall part. For the battery cell 20 adopting this structure, on the one hand, it is convenient for the tab 232 to be connected to the electrode terminal 22 provided on the wall part 211 through the first section 2321, which is beneficial to reduce the difficulty in assembling; on the other hand, by the first section 2321 abutting against the at least one liquid retaining layer 25, the electrolytic solution stored in the liquid retaining layer 25 can climb into the main body 231 of the electrode assembly 23 through the capillary phenomenon of the tab 232, so as to improve the reflux effect of the electrolytic solution in the liquid retaining layer 25, thereby effectively enhancing the wetting effect of the electrolytic solution on the main body 231 of the electrode assembly 23, which is beneficial to improve the use performance of the battery cell 20.

According to some embodiments of the present application, referring to FIG. 6, the tab 232 further includes a second section 2322 and a third section 2323, where the first section 2321, the second section 2322 and the third section 2323 are connected in succession, the third section 2323 is connected to the main body 231, and the third section 2323 is located at the side of the support frame 24 facing the main body 231.

In the above, the third section 2323 is connected to the main body 231, and the third section 2323 is located on the side of the support frame 24 facing the main body 231, that is, the first section 2321 and the third section 2323 of the tab 232 connected through the second section 2322 are respectively located on two sides of the support frame 24 in the thickness direction X of the wall part, and the first section 2321 is connected to the electrode terminal 22, and the third section 2323 is connected to the main body 231.

It should be noted that the assembly relationship between the second section 2322 and the support frame 24 can be various. For example, the second section 2322 may be located at one end of the support frame 24 in a direction perpendicular to the thickness direction X of the wall part, so that the tab 232 is a structure bending around the support frame 24, or the support frame 24 may be provided with a mounting hole for allowing the second section 2322 of the tab 232 to pass therethrough, so that after the second section 2322 passes through the support frame 24, the first section 2321 and the third section 2323 can be located on two sides of the support frame 24 respectively.

The tab 232 consists of the first section 2321, the second section 2322 and the third section 2323 connected in succession, the third section 2323 is connected to the main body 231 and located at the side of the support frame 24 facing the main body 231, and the first section 2321 is located at the side of the liquid retaining layer 25 facing the wall part 211 and connected to the electrode terminal 22, such that the tab 232 has a portion located at the side of the liquid retaining layer 25 facing the wall part 211, enabling simple structure and easy realization.

In some embodiments, continuing to refer to FIG. 6, in a first direction Y, the second section 2322 is located at one end of the support frame 24, and the first direction Y is perpendicular to the thickness direction X of the wall part.

It should be noted that the first direction Y is perpendicular to the thickness direction X of the wall part, and the first direction Y may be the length direction of the wall part 211, or the width direction of the wall part 211. Exemplarily, in FIG. 4 and FIG. 6, the wall part 211 is the end cover 213 of the shell 21, and the first direction Y is the width direction of the wall part 211. That is, the width direction of the wall part 211 is the same as that of the end cover 213, and is also the same as the thickness direction of the main body 231 of the electrode assembly 23.

By providing the second section 2322 of the tab 232 to be located at one end of the support frame 24 in the first direction Y, the tab 232 is in a structure bending around the support frame 24, so as to realize that the first section 2321 and the third section 2323 of the tab 232 are located at two sides of the support frame 24 in the thickness direction X of the wall part respectively. The battery cell 20 of such structure facilitates reducing the difficulty in manufacturing the tab 232 and the difficulty in assembling the tab 232 to the support frame 24.

According to some embodiments of the present application, referring to FIG. 4, FIG. 5 and FIG. 6, the battery cell 20 includes two electrode assemblies 23; and in the first direction Y, the main bodies 231 of the two electrode assemblies 23 are stacked, and the second sections 2322 of the tabs 232 with the same polarity of the two electrode assemblies 23 are located at two ends of the support frame 24, respectively.

In the above, the main bodies 231 of the two electrode assemblies 23 are stacked in the first direction Y, that is, the main bodies 231 of the two electrode assemblies 23 are stacked in the thickness direction of the main bodies 231.

The second sections 2322 of the tabs 232 with the same polarity of the two electrode assemblies 23 are respectively located at the two ends of the support frame 24, that is, the tabs 232 of the two electrode assemblies 23 that are both positive electrodes or negative electrodes bend respectively from the two ends of the support frame 24 in the first direction Y to the side of the support frame 24 facing the wall part 211, so that the second sections 2322 of the tabs 232 with the same polarity of the two electrode assemblies 23 are respectively located at the two ends of the support frame 24 in the first direction Y. That is, the second sections 2322 of the tabs 232 with the same polarity of the two electrode assemblies 23 are provided facing each other in the first direction Y.

In FIG. 4 and FIG. 5, each electrode assembly 23 has two tabs 232 with opposite polarities, used respectively for outputting the positive electrode and the negative electrode of the electrode assembly 23. The two tabs 232 are arranged at an interval in the second direction Z, and any two of the thickness direction X of the wall part, the first direction Y, and the second direction Z are perpendicular to each other. Similarly, the battery cell 20 is provided with two electrode terminals 22, the two electrode terminals 22 are provided at an interval on the wall part 211 in the second direction Z, and each electrode terminal 22 is connected to one tab of the corresponding electrode assembly 23, so as to realize outputting or inputting of the positive electrode and the negative electrode of the battery cell 20.

The battery cell 20 is provided with two electrode assemblies 23 stacked in the first direction Y, and the second sections 2322 of the tabs 232 with the same polarity of the two electrode assemblies 23 are located at two ends of the support frame 24 in the first direction Y, respectively. That is, the tabs 232 of the two electrode assemblies 23 bend respectively around the two ends of the support frame 24 in the first direction Y, so as to achieve that the two electrode assemblies 23 share one support frame 24 while achieving that the first sections of the tabs 232 of the two electrode assemblies 23 are both located at the sides of the liquid retaining layers 25 facing the wall part 211, and facilitate reducing the difficulty in assembling the tabs 232 of the two electrode assemblies 23 to the support frame 24.

According to some embodiments of the present application, referring to FIGS. 4, 5 and 6, the battery cell 20 further includes current collecting members. The current collecting members 27 are each connected to the corresponding electrode terminal 22 and the first section 2321. In the thickness direction X of the wall part, the first section 2321 is located between the current collecting member 27 and the liquid retaining layer 25.

In the above, the current collecting member 27 serves to connect the electrode terminal 22 and the first section 2321 of the tab 232. The current collecting member 27 may be made of a variety of materials, such as copper, iron, aluminum, steel, or aluminum alloy, etc.

The first section 2321 is located between the current collecting member 27 and the liquid retaining layer 25. That is, in the thickness direction X of the wall part, the first section 2321 of the tab 232 is located at one side of the liquid retaining layer 25 facing the wall part 211, and the current collecting member 27 is located between the first section 2321 and the wall part 211.

Exemplarily, the battery cell 20 includes two current collecting members 27, the two current collecting members 27 are provided at an interval in the second direction Z, each current collecting member 27 is connected to one electrode terminal 22, and each current collecting member 27 is connected to the first sections 2321 of the tabs with the same polarity of the multiple electrode assembly 23, so as to realize outputting or inputting of the positive electrode and the negative electrode of the battery cell 20.

In some embodiments, the battery cell 20 may further include at least one insulating member 28. In the thickness direction X of the wall part, the insulating member 28 is arranged on the side of the wall part 211 facing the electrode assembly 23. The insulating member 28 is located between the wall part 211 and the current collecting member 27 to insulate and isolate the wall part 211 from the current collecting member 27, thereby facilitating reducing the risk of short circuit between the current collecting member 27 and the wall part 211.

In the above, the insulating member 28 may be made of various materials. Exemplarily, the material of the insulating member 28 may be plastic, rubber, or silicone, etc.

The battery cell 20 is further provided with the at least one current collecting member 27, the at least one current collecting member 27 is connected to the electrode terminals 22 and the first sections 2321 of the tabs 232, and the first sections 2321 are provided between the at least one current collecting member 27 and the at least one liquid retaining layer 25, so as to on the one hand, effectively reduce the connection difficulty between the electrode terminals 22 and the tabs 232 to reduce the assembly difficulty of the battery cell 20, and on the other hand, improve the contact effect between the first sections 2321 and the at least one liquid retaining layer 25, so that the electrolytic solution stored in the liquid retaining layer 25 can climb into the main body 231 of the electrode assembly 23 through the tabs 232, which is beneficial to improve the wetting effect of the electrode assembly 23.

In some embodiments, the surface of the tab 232 is a rough surface. That is, the surface of the tab 232 is a roughened surface.

The surface of the tab 232 is provided as the rough surface, to increase the climbing speed at which the electrolytic solution stored in the liquid retaining layer 25 climbs into the main body 231 of the electrode assembly 23, which is beneficial to further improve the reflux effect of the electrolytic solution stored in the liquid retaining layer 25 flowing back into the main body 231 of the electrode assembly 23.

In some embodiments, the surface of the tab 232 is provided with a strip-shaped rib.

In the above, the strip-shaped rib provided on the surface of the tab 232 may be in various extension directions, for example, extending in a direction in which the first section 2321, the second section 2322 and the third section 2323 are connected in succession, or perpendicular to the direction in which the first section 2321, the second section 2322 and the third section 2323 are connected in succession.

The surface of the tab 232 is provided with the strip-shaped rib, to increase the climbing speed at which the electrolytic solution stored in the liquid retaining layer 25 climbs into the main body 231 of the electrode assembly 23, which is beneficial to further improve the reflux effect of the electrolytic solution stored in the liquid retaining layer 25 flowing back into the main body 231 of the electrode assembly 23.

According to some embodiments of the present application, referring to FIGS. 6, 7 and 8, the battery cell 20 further includes an adhesive layer (not shown in the drawings), and the adhesive layer bonds with the liquid retaining layers 25 and the support frame 24. That is, the liquid retaining layer 25 are bonded to the support frame 24.

Exemplarily, the adhesive layer may be glue or double-sided tape disposed between the liquid retaining layers 25 and the support frame 24.

It should be noted that, in the embodiment in which the support frame 24 is provided with a groove 241 and a portion of the liquid retaining layer 25 is accommodated in the groove 241, the adhesive layer may be provided on the groove bottom surface of the groove 241, or on the groove side surface of the groove 241, or, the adhesive layer may be provided on both the groove bottom surface of the groove 241 and the groove side surface of the groove 241, so as to achieve the bonding of the liquid retaining layer 25 to the support frame 24

The adhesive layer is provided between the liquid retaining layer 25 and the support frame 24, to make the liquid retaining layer 25 bond to the support frame 24, so as to reduce the connection difficulty between the liquid retaining layer 25 and the support frame 24, and improve the connection stability and connection reliability between the liquid retaining layer 25 and the support frame 24.

According to some embodiments of the present application, the melting point of the material of the liquid retaining layer is Q, satisfying Q≥40°C.

Exemplarily, the liquid retaining layer 25 may be made of foam or water-absorbing resin, etc.

By setting the melting point of the material of the liquid retaining layer 25 to be greater than or equal to 40°C, the melting point of the material of the liquid retaining layer 25 can be greater than or equal to the normal use temperature of the battery cell 20, thereby reducing the phenomenon that the liquid retaining layer 25 catches fire and burns during use, thereby facilitating the use safety of the battery cell 20.

According to some embodiments of the present application, referring to FIG. 3, FIG. 4 and FIG. 5, the shell 21 includes a casing 212 and an end cover 213. The casing 212 has an accommodation cavity 2121 with an opening 2122 formed thereinside, and the electrode assemblies 23 are accommodated in the accommodation cavity 2121. The end cover 213 seals the opening 2122, and the end cover 213 is the wall part 211.

In the above, the end cover 213 is a wall part 211. That is, the electrode terminal 22 is arranged on the end cover 213, and the tabs 232 of the electrode assembly 23 protrude from one end of the main body 231 facing the end cover 213, so that the support frame 24 and the liquid retaining layer 25 are provided between the end cover 213 and the main body 231 of the electrode assembly 23 in the thickness direction X of the wall part.

The wall part 211 of the shell 21 is the end cover 213 of the shell 21 used for sealing the opening 2122 of the casing 212. For the battery cell 20 of this structure, it is convenient to assemble the electrode terminals 22 and helps to reduce the assembly difficulty between the electrode terminals 22 and the tabs 232, thereby effectively improving the production efficiency of the battery cell 20.

It should be noted that the structure of the battery cell 20 is not limited to this. In some embodiments, the battery cell 20 may be in other structures. For example, the shell 21 includes a casing 212 and an end cover 213; the casing 212 includes a side wall and the wall part 211 which are integrally formed, the side wall is provided surrounding the wall part 211, the side wall has one end connected to the wall part 211 and the other end defining the opening 2122 in the thickness direction X of the wall part, the side wall and the wall part 211 jointly define the accommodation cavity 2121 for accommodating the electrode assemblies 23, and the end cover 213 seals the opening 2122. That is, the wall part 211 is the bottom wall of the casing 212 disposed opposite to the end cover 213 in the thickness direction X of the wall part. That is, the electrode terminal 22 is disposed on the bottom wall of the casing 212 disposed opposite to the end cover 213 in the thickness direction X of the wall part.

In the above, the casing 212 includes a side wall and a wall part 211 which are integrally formed, that is, the casing 212 is made by an integral forming process, such as stamping, casting or extrusion molding. That is, the side wall and the wall part 211 of the casing 212 are of an integral structure.

The wall part 211 is a wall of the casing 212 that is provided opposite to the end cover 213 in the thickness direction X of the wall part. The battery cell 20 adopting such structure can make components such as electrode terminals 22 away from the end cover 213, and make the wall part 211 and the end cover 213 have no direct connection therebetween, thereby alleviating the phenomenon that the force generated when the components such as the electrode terminals 22 pull or twist the wall part 211 acts on the end cover 213, thereby reducing the risk of connection failure between the end cover 213 and the casing 212, which is beneficial to further reduce the risk of leakage of the battery cell 20 during use.

According to some embodiments of the present application, the present application further provides a battery 100, including at least one battery cell 20 of any solution above.

According to some embodiments of the present application, the present application further provides an electric device, including at least one battery 100 of any solution above, where the battery 100 is used to provide electric energy for the electric device.

The electric device may be any of the aforementioned devices or systems using the battery 100.

According to some embodiments of the present application, referring to FIG. 3 to FIG. 8, the present application provides a battery cell 20. The battery cell 20 includes a shell 21, electrode terminals 22, electrode assemblies 23, current collecting members 27, a support frame 24 and liquid retaining layers 25. The shell 21 may be provided with a wall part 211. The shell 21 is used to accommodate the electrolytic solution. The electrode terminals 22 are provided on the wall part 211. The electrode assemblies 23 are accommodated in the shell 21. The electrode assembly 23 has a main body 231 and tabs 232. In the thickness direction X of the wall part, the tabs 232 protrude from an end of the main body 231 facing the wall part 211. The current collecting members 27 are provided between the wall part 211 and the tabs 232, and the current collecting members 27 are connected to the electrode terminals 22 and the tabs 232. In the thickness direction X of the wall part, the support frame 24 is provided between the wall part 211 and the main body 231. The support frame 24 is configured to support the main body 231. The liquid retaining layers 25 are provided on the support frame 24. In the thickness direction X of the wall part, the liquid retaining layers 25 are provided between the wall part 211 and the support frame 24, the side of the support frame 24 facing the wall part 211 is provided with a groove 241, and at least a portion of the liquid retaining layer 25 is accommodated in the groove 241 and bonds with the support frame 24. The groove bottom wall of the groove 241 is provided with a through hole 242, and the through hole 242 extends through the groove bottom wall of the groove 241 in the thickness direction X of the wall part. In the above, the tab 232 includes a first section 2321, a second section 2322 and a third section 2323 which are connected in succession. In the thickness direction X of the wall part, the first section 2321 is located on the side of the liquid retaining layer 25 facing the wall part 211, and between the liquid retaining layers 25 and the current collecting component 27. The first section 2321 is connected to the current collecting component 27 and abuts against at least one of the liquid retaining layers 25. The third section 2323 is located on the side of the support frame 24 away from the wall part 211, and connected to the main body 231. In the first direction Y, the second section 2322 is located at one end of the support frame 24, and the first direction Y is perpendicular to the thickness direction X of the wall part.

It should be noted that without conflict, the embodiments and the features of the embodiments in the present application may be combined with each other.

The above are only preferred embodiments of the present application and are not intended to limit the present application. For those skilled in the art, the present application may have various modifications and variations. Any modifications, equivalent replacements, improvements, etc. made within the spirit and principles of the present application shall be included in the protection scope of the present application.

## Claims

1. A battery cell, comprising:
a shell, having a wall part;
an electrode terminal, provided on the wall part;
at least one electrode assembly accommodated in the shell, wherein the at least one electrode assembly each has a main body and a tab, and in a thickness direction of the wall part, the tab protrudes from an end of the main body facing the wall part and is connected to the electrode terminal;
a support frame, wherein in the thickness direction of the wall part, the support frame is provided between the wall part and the main body, and the support frame is configured to support the main body; and
at least one liquid retaining layer provided at the support frame, wherein the at least one liquid retaining layer is configured to absorb and store an electrolytic solution in the shell.

2. The battery cell according to claim 1, wherein in the thickness direction of the wall part, the at least one liquid retaining layer is located between the wall part and the support frame.

3. The battery cell according to claim 2, wherein in the thickness direction of the wall part, the side of the support frame facing the wall part is provided with at least one groove, and the at least one liquid retaining layer is at least partially accommodated in the at least one groove.

4. The battery cell according to claim 3, wherein the support frame is provided with at least one through hole which communicates with the at least one groove and an internal space of the shell.

5. The battery cell according to claim 4, wherein the at least one through hole is provided at a groove bottom wall of the at least one groove, and extends through the groove bottom wall of the at least one groove in the thickness direction of the wall part.

6. The battery cell according to any one of claims 3 to 5, wherein the battery cell comprises multiple liquid retaining layers, and in the thickness direction of the wall part, the side of the support frame facing the wall part is provided with multiple grooves, and each of the liquid retaining layers is accommodated in one corresponding groove.

7. The battery cell according to any one of claims 2 to 6, wherein in the thickness direction of the wall part, the tab comprises a first section located on a side of the at least one liquid retaining layer facing the wall part, the first section is connected to the electrode terminal, and the first section abuts against at least one of the at least one liquid retaining layer.

8. The battery cell according to claim 7, wherein the tab further comprises a second section and a third section, wherein the first section, the second section and the third section are connected in succession, the third section is connected to the main body, and the third section is located at a side of the support frame facing the main body.

9. The battery cell according to claim 8, wherein in a first direction, the second section is located at one end of the support frame, and the first direction is perpendicular to the thickness direction of the wall part.

10. The battery cell according to claim 9, wherein the battery cell comprises:
two electrode assemblies, wherein in the first direction, main bodies of the two electrode assemblies are stacked, and the second sections of tabs with a same polarity of the two electrode assemblies are located at two ends of the support frame, respectively.

11. The battery cell according to any one of claims 7 to 10, wherein the battery cell further comprises:
at least one current collecting member, connected to the electrode terminal and the first section,
wherein in the thickness direction of the wall part, the first sections are located between the at least one current collecting member and the at least one liquid retaining layer.

12. The battery cell according to any one of claims 7 to11, wherein a surface of the tab is a rough surface.

13. The battery cell according to any one of claims 7 to11, wherein a surface of the tab is provided with a strip-shaped rib.

14. The battery cell according to any one of claims 1 to 13, wherein the battery cell further comprises an adhesive layer, and the adhesive layer bonds with the at least one liquid retaining layer and the support frame.

15. The battery cell according to any one of claims 1 to14, wherein a melting point of a material of the at least one liquid retaining layer is Q, satisfying Q≥40°C.

16. The battery cell according to any one of claims 1 to 15, wherein the shell comprises:
a casing provided thereinside with an accommodation cavity with an opening, wherein the at least one electrode assembly is accommodated in the accommodation cavity; and
an end cover configured for sealing the opening, wherein the wall part is the end cover.

17. The battery cell according to any one of claims 1 to 15, wherein the shell comprises:
a casing comprising a side wall and the wall part which are integrally formed, wherein the side wall is provided surrounding the wall part, the side wall has one end connected to the wall part and the other end defining the opening in the thickness direction of the wall part, and the side wall and the wall part jointly define the accommodation cavity configured for accommodating the at least one electrode assembly; and
an end cover configured for sealing the opening.

18. A battery, comprising at least one battery cell each according to any one of claims 1 to 17.

19. An electric device, comprising at least one battery each according to claim 18.
